# DEMANDE DE BREVET EUROPEEN

(11) **EP 2 871 514 A1**
(43) Date de publication de la demande: **13.05.2015**
(21) Numéro de dépôt: 14191796.3
(22) Date de dépôt: 05.11.2014
(51) Int. Cl.: G02B 27/22

(54) **Platine porte vue**

(30) Priorité: 08.11.2013 FR 1360976
(71) Demandeur: Sagniez, Philippe, 59300 Valenciennes (FR)
(72) Inventeur: Sagniez, Philippe, 59300 Valenciennes (FR)
(74) Mandataire: Cabinet Plasseraud

(57) **Abrégé**

Elément support (1) destiné à maintenir un élément souple et plan dit feuille, comprenant :
- une paroi plane (10) sur laquelle est destinée à être plaquée ladite feuille (Im),
- des moyens (11,12) de guidage de la feuille, s'élevant de ladite paroi plane (10), destinés à coopérer avec deux bords latéraux opposés de ladite feuille
- des moyens de butée (2) de la feuille, s'élevant de ladite paroi plane (10) destinés à retenir ladite feuille par son bord inférieur, de telle façon à ce que lorsque la feuille est insérée entre lesdits moyens de guidage (11,12) celle-ci est retenue par son bord inférieur par lesdits moyens de butée (2),

Selon l'invention, ledit élément support (1) comprend une rampe (3) saillante, positionnée juste en amont desdits moyens de butée (2) selon le sens d'insertion de la feuille, lesdits moyens de butée (2) s'étendant latéralement, localement, sur au moins un coté de ladite rampe (3) de telle façon à définir au moins une zone de support (20) pour la feuille.

## Description

La présente invention concerne le domaine des supports d'images, et, plus particulièrement, mais non limitativement, les supports d'images destinés pour la vision en relief d'une image stéréoscopique.

Dans ce domaine, il est connu un support d'image constitué essentiellement d'un carton prédécoupé définissant une structure plane, cette structure comprenant un élément support pour une image et un élément support de deux optiques faisant face à l'élément support en position déployée. Les deux éléments supports sont séparés par un élément central et sont pliables de façon à pouvoir stocker le support d'image à plat, dans une position de moindre encombrement. Un tel état de la technique est par exemple divulgué dans le document FR 2 828 745.

De tels dispositifs de l'état de la technique, en matière souple tel que le carton, présentent une durée de vie limitée, le support d'image se détériorant rapidement au fur et à mesure des manipulations du support d'image. Par ailleurs, l'utilisation de matière souple telle que du carton implique des déformations du support d'image ce qui, parfois, peut influer sur la distance focale des moyens de visionnage et ne permet donc pas un visionnage net de l'image.

Ces supports d'images s'avèrent ainsi fragiles et sont rarement réutilisables une fois détériorés.

D'autres supports d'image constitués en matière plastique définissant une structure plane existent et permettent de combler une partie des inconvénients d'une structure en carton. Le document FR 12 53402 du présent demandeur divulgue un support d'image comprenant une paroi plane, ainsi que des languettes de maintien définissant un espace d'insertion. Certaines des languettes de maintien sont prévues sur les bords latéraux du support et sont destinées à coopérer au guidage avec deux bords latéraux opposés de l'image lors de son insertion. D'autres languettes sont prévues en partie basse du support et constituent des butées retenant l'image par son bord intérieur.

Toute image dimensionnée à la taille du dispositif support peut être retenue et maintenue par le support d'image. Selon les constatations de l'inventeur ; il existe un besoin pour un support d'image qui permette à l'utilisateur de s'apercevoir rapidement que l'image insérée ne convient pas à l'application, ou tout simplement d'écarter les images non autorisées de l'élément support.

L'invention a notamment pour objectif de pallier les différents inconvénients de ces techniques connues.

Plus précisément, un objectif de l'invention est de fournir un support d'image qui puisse être utilisé rapidement, fournisse un bon maintien de l'image, tout en permettant d'écarter toutes les images non prévues pour fonctionner avec l'élément support.

L'invention a également pour objectif, au moins dans un mode de réalisation particulier, de fournir un support d'image qui soit robuste et peu coûteux.

Encore un autre objectif de l'invention est, au moins dans un mode de réalisation particulier, de fournir un support d'image qui soit simple à mettre en oeuvre.

Ces objectifs, ainsi que d'autres qui apparaîtront plus clairement par la suite, sont atteints selon l'invention à l'aide d'un élément support destiné à maintenir un élément souple et plan, dit feuille, comprenant :
- une paroi plane sur laquelle est destinée à être plaquée ladite feuille,
- des moyens de guidage de la feuille, s'élevant de ladite paroi plane, destinés à coopérer avec deux bords latéraux opposés de ladite feuille,
- des moyens de butée de la feuille, s'élevant de ladite paroi plane destinés à retenir ladite feuille par son bord inférieur, de telle façon à ce que lorsque la feuille est insérée entre lesdits moyens de guidage celle-ci est retenue par son bord inférieur par lesdits moyens de butée.

Selon l'invention, ledit élément support comprend une rampe saillante, positionnée juste en amont desdits moyens de butée selon le sens d'insertion de la feuille, lesdits moyens de butée s'étendant latéralement localement sur au moins un coté de ladite rampe de telle façon à définir au moins une zone de support pour la feuille et de telle façon que :
- lorsque l'on insère la feuille entre les moyens de guidage en la faisant glisser jusqu'aux moyens de butée, la feuille repose sur ladite au moins une zone de support et est maintenue par lesdits moyens de butée si ladite feuille comprend une encoche de maintien positionnée sur ladite feuille et de dimension telle que celle-ci chevauche ladite rampe tout en permettant à la zone de support 20 de retenir la feuille,
- toute feuille, ne comprenant pas d'encoche de maintien ou présentant une encoche ne respectant pas les dimensions et la position sur l'image de l'encoche de maintien, est décalée par ladite rampe de manière à échapper lesdits moyens de butée, sous l'effet de la gravité.

Selon des caractéristiques optionnelles de l'invention, prises seules ou en combinaison :
- ladite rampe est dite deuxième rampe et prolonge une première rampe dont la pente présente un angle d'élévation par rapport à la paroi plane inférieure à l'angle d'élévation de la pente de deuxième rampe ;
- la longueur de la première rampe est supérieure à la longueur de la deuxième rampe, notamment d'un rapport supérieur à trois ;
- ladite rampe et lesdits moyens de butée forment un élément monobloc ;
- l'élément support d'image, ladite rampe, lesdits moyens de butée, et lesdits moyens de guidage forment une pièce plastique d'un seul tenant ;
- lesdits moyens de guidage comprennent une languette de maintien écartée par rapport à ladite paroi plan afin de définir un espace d'insertion prévu pour la réception et le maintien d'un bord de la feuille.

L'invention concerne également une visionneuse stéréoscopique destinée pour la vision en relief d'une image stéréoscopique comprenant un élément support d'image conforme à l'invention.

L'invention concerne également un kit comprenant un élément support ou une visionneuse conforme à l'invention, et au moins une feuille présentant une encoche de maintien destinée à coopérer avec ledit élément support.

L'invention concerne encore l'utilisation d'une feuille présentant une encoche de maintien au sens de l'invention et destinée à coopérer avec un élément support conforme à l'invention ou encore un élément support d'une visionneuse comprenant un tel support d'image.

Selon un mode de réalisation de l'invention, ladite feuille utilisée avec le kit est une image.

D'autres caractéristiques et avantages de l'invention apparaîtront plus clairement à la lecture de la description suivante d'un mode de réalisation particulier de l'invention, donnée à titre de simple exemple illustratif et non limitatif, et des dessins annexés, parmi lesquels :
- la figure 1 est une vue de face d'un élément support d'image conforme à l'invention selon un mode de réalisation ;
- la figure 2 est une vue en perspective de l'élément support d'image tel qu'illustré à la figure 1 ;
- la figure 3 est une vue de détail des moyens de butée et de la rampe de l'élément support de la figure 1,
- les figures 4a à 4c sont des vues schématiques illustrant l'élément support d'image selon l'invention recevant différents types d'images, à savoir respectivement une image présentant une encoche de maintien au sens de l'invention, une image présentant une encoche non conforme et une image sans encoche.

Comme précédemment évoqué, le principe général de l'invention repose donc sur la mise en oeuvre d'un élément support d'image, destiné à maintenir une image pour le visionnage de cette dernière.

Pour des raisons de clarté, le terme « image » sera utilisé dans la suite de la description pour désigner l'élément souple et plan, (dit feuille). Bien évidemment l'élément support convient pour le maintien d'éléments souples et plans autres que des images.

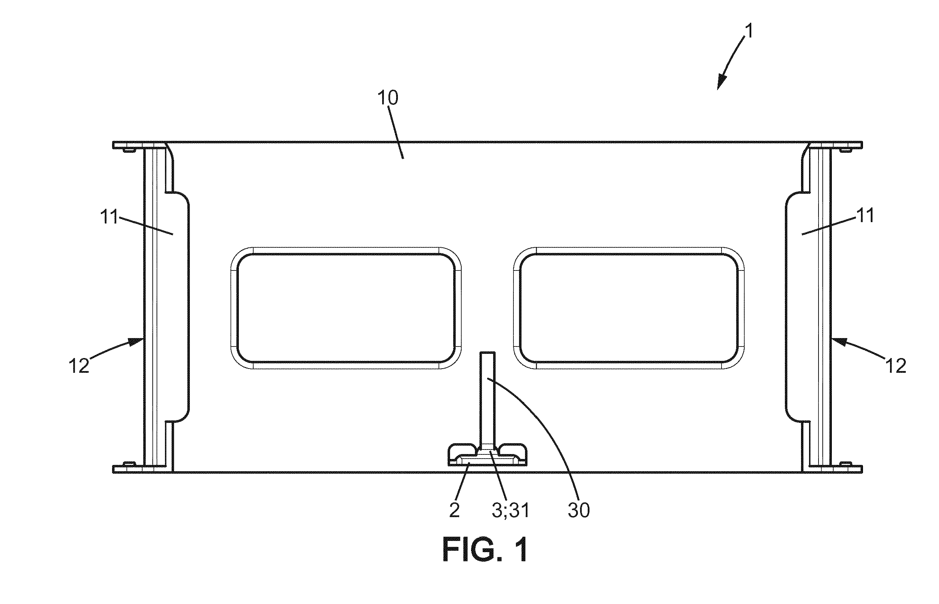

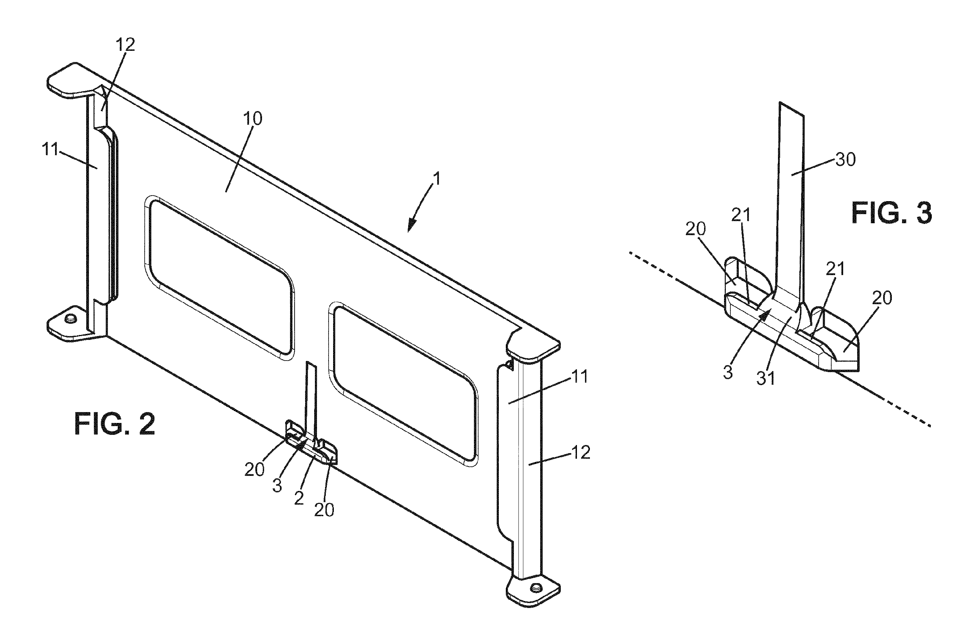

Comme on peut l'observer aux figures 1 et 2, selon un mode de réalisation, l'élément support d'image 1 comprend une paroi plane 10, notamment rectangulaire, destinée à recevoir une image à visionner, et des bords latéraux 12 s'élevant notamment de ladite paroi plane 10 sur une faible hauteur.

L'image est maintenue contre la paroi 10 par le biais de moyens de guidage 11,12, tels que des languettes de maintien 11 par exemple, disposées sur les bords latéraux 12, les languettes de maintien étant notamment légèrement décalées de la paroi de manière à former un espace de part et d'autre de l'élément support d'image 1 pour guider et maintenir l'image, par ses bords opposés, contre la paroi 10.

Selon le mode de réalisation illustré sur les figures, chaque languette de maintien 11 est saillante, écartée par rapport à la paroi 10 de manière à définir un espace d'insertion pour la réception et le maintien d'un bord de l'image, et s'étend sur tout ou partie de la hauteur de l'élément support d'image 1.

Selon un autre mode de réalisation, on peut disposer plusieurs languettes successives, de taille moindre, au niveau des bords latéraux de l'élément support d'image 1.

Selon l'invention, des moyens de butée 2 sont également disposés sur l'élément support d'image 1 de telle façon à maintenir l'image en position verticale pour le visionnage de l'image.

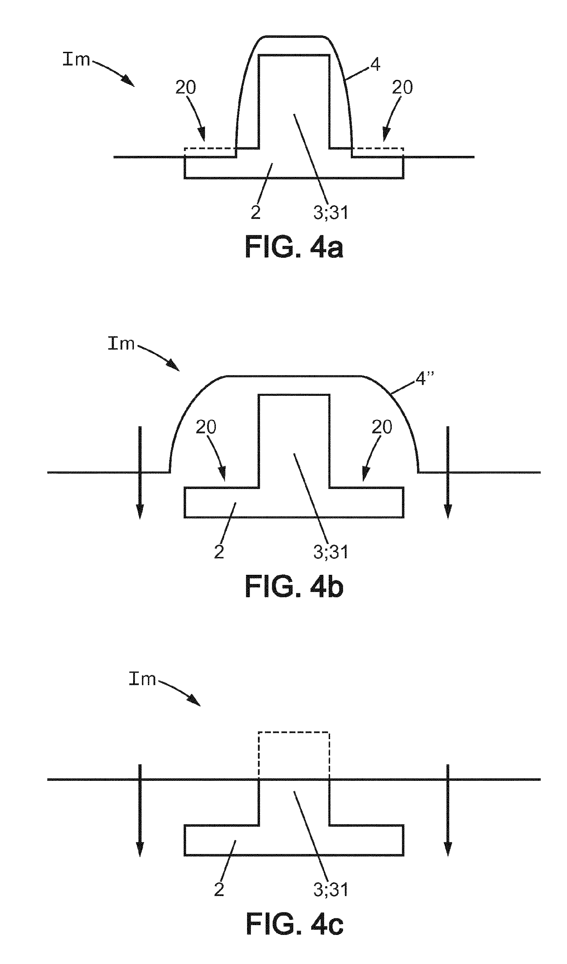

Par exemple, selon un mode de réalisation illustré à la figure 4, non limitatif, les moyens de butée 2 sont disposés sur l'élément support d'image 1, les moyens de butée 2 étant notamment disposés à proximité immédiate du bord inférieur de la paroi plane 10, les moyens de butée 2 étant aptes à coopérer avec le bord inférieur de l'image.

Pour positionner l'image, on insère l'image entre les moyens de guidage 11, 12 puis on la fait glisser jusqu'à ce que le bord inférieur de l'image Im entre en contact avec les moyens de butée 2.

Selon une caractéristique essentielle, l'élément support d'image comprend une rampe 3 saillante, positionnée juste en amont des moyens de butée 2 selon le sens d'insertion de l'image, les moyens de butée 2 s'étendant localement latéralement sur au moins un coté de la rampe 3 de telle façon à définir au moins une zone de support 20 pour l'image.

Comme on peut l'observer sur la figure 3, à titre de mode de réalisation, les moyens de butée 2 s'étendent latéralement sur les deux cotés de la rampe 3 de telle façon à définir deux zones de support 20 pour l'image. Ces zones de support 20 peuvent être plus ou moins longues. Vue de face, les moyens de butée et la rampe forment une conformation en T inversé.

De préférence, les moyens de butée 2 comprennent également un retour 21, formé par une aile s'élevant verticalement depuis le bord de la zone de support 20, le retour 21 empêchant l'image de glisser de la zone de support 20.

Le fonctionnement d'un tel élément support est le suivant :
Lorsque l'on insère l'image entre lesdits moyens de guidage 11, 12 en la faisant glisser jusqu'aux moyens de butée 2, l'image repose sur ladite au moins une zone de support 20, par son bord inférieur, et est maintenue par lesdits moyens de butée si ladite image comprend une encoche de maintien 4, judicieusement positionnée sur ladite image et de dimension telle que celle-ci chevauche ladite rampe 3 tout en permettant à la zone de support 20 de retenir l'image.
Toute image ne comprenant pas d'encoche de maintien 4 ou présentant une encoche 4" ne respectant pas les dimensions et la position sur l'image de l'encoche de maintien est décalée par ladite rampe 3 de manière à échapper lesdits moyens de butée 2, sous l'effet de la gravité.

Ainsi, comme illustré à la figure 4a, lorsque l'on insère l'image à visionner dans l'élément support d'image 1, l'encoche de maintien 4 de l'image à visionner vient chevaucher la rampe 3, tout en permettant que le bord inférieur de l'image à proximité de l'encoche de maintien 4 repose sur la zone de support 20.

Dans le cas où l'image ne comprend pas d'encoche de maintien, le bord inférieur de l'image glisse sur la rampe 3 qui décale le bord inférieur et fait échapper les moyens de butée : l'image Im est éjectée, sous l'effet de la gravité en dehors de l'élément support d'image, celle-ci ne pouvant pas reposer sur les moyens de butée 2, et plus particulièrement sur la zone de support 20. Un tel cas de figure est illustré à la figure 4c.

Encore selon un autre cas de figure, notamment illustré à la figure 4b, où l'encoche 4" de l'image ne respecte pas les conditions d'encoche de maintien, et présente, par exemple des dimensions trop grandes pour que l'image puisse reposer sur la zone de support 20, par son bord inférieur : l'image ne peut pas coopérer avec les moyens de butée 2 et se retrouve également éjectée de l'élément support d'image 1 par l'action de la rampe 3.

Selon un mode de réalisation particulier de l'invention illustré à la figure 4, la rampe 3 est dite deuxième rampe 31 et prolonge une première rampe 30 dont la pente présente un angle d'élévation par rapport à la paroi plane inférieure à l'angle d'élévation de la pente de deuxième rampe 31. Il est à noter que dans ce cas l'encoche de maintien 4 doit contourner et chevaucher la deuxième rampe 31 pour permettre aux moyens de butée de retenir l'image. En revanche, il n'est pas nécessaire que l'encoche de maintien 4 chevauche également la première rampe 30 pour assurer la retenue de l'image.

A l'usage, l'inventeur a constaté une éjection plus systématique des images Im avec la présence de la première rampe 30.

De préférence, la longueur de la première rampe 31 est supérieure à la longueur de la deuxième rampe 31, notamment d'un rapport supérieur à trois.

La rampe 3, dite le cas échéant deuxième rampe 31 ne s'étend que localement sur la hauteur de l'élément support 1, par exemple d'une dimension inférieure à 1 cm à partir des moyens de butée. La première rampe 30 s'étend depuis la paroi plane jusqu'à la deuxième rampe 31 et peut s'étendre sur une longueur supérieure.

De préférence, la rampe, ou le cas échéant la première rampe 30 et la deuxième rampe 31 sont dirigées dans une direction parallèle à la direction des moyens de guidage.

Selon un mode de réalisation préférentiel de l'invention, la rampe 3, (le cas échant la première rampe 30 et la deuxième rampe 31) et les moyens de butée 2 forment un élément monobloc, la portion terminale de la rampe 3 faisant la liaison avec les moyens de butée 2. Une telle disposition permet notamment de faciliter la fabrication de l'élément support, au moyen d'un moulage par injection par exemple, le moule destiné à la réalisation de l'élément support d'image étant simplifié.

Avantageusement, l'élément support d'image 1, la rampe 3, les moyens de butée 2 et les languettes de maintien 11 peuvent former une seule et même pièce plastique de telle façon à simplifier la fabrication et à en réduire les coûts.

L'invention concerne également une visionneuse stéréoscopique destinée pour la vision en relief d'une image stéréoscopique comprenant un élément support d'image 1 tel que décrit précédemment.

L'invention concerne aussi un kit comprenant un élément support d'image 1 tel que décrit précédemment ou une visionneuse, et au moins une image présentant une encoche de maintien 4 destinée à coopérer avec l'élément support d'image 1 pour assurer le maintien de l'image Im dans l'élément support 1.

Naturellement, d'autres modes de réalisation auraient pu être envisagés par l'homme du métier sans pour autant sortir du cadre de l'invention définie par les revendications ci-après.

### NOMENCLATURE

- 1.: Elément support,
- 10.: Paroi plane,
- 11.: Languettes de maintien,
- 12.: Bords latéraux,
- 2.: Moyens de butée,
- 20.: Zone de support pour l'image,
- 21.: Retour.
- 3.: Rampe,
- 30.: Première rampe 30,
- 31.: Deuxième rampe 31,
- 4.: Encoche de maintien,
- 4".: Encoche non conforme,
- Im.: Elément souple et plan

## Revendications

1. Elément support (1) destiné à maintenir un élément souple et plan (Im) dit feuille,
comprenant :
- une paroi plane (10) sur laquelle est destinée à être plaquée ladite feuille (Im),
- des moyens (11,12) de guidage de la feuille, s'élevant de ladite paroi plane (10), destinés à coopérer avec deux bords latéraux opposés de ladite feuille
- des moyens de butée (2) de la feuille, s'élevant de ladite paroi plane (10) destinés à retenir ladite feuille par son bord inférieur, de telle façon à ce que lorsque la feuille est insérée entre lesdits moyens de guidage (11,12) celle-ci est retenue par son bord inférieur par lesdits moyens de butée (2),
**caractérisé en ce que** ledit élément support (1) comprend une rampe (3) saillante, positionnée juste en amont desdits moyens de butée (2) selon le sens d'insertion de la feuille, lesdits moyens de butée (2) s'étendant latéralement, localement, sur au moins un coté de ladite rampe (3) de telle façon à définir au moins une zone de support (20) pour la feuille et de telle façon que :
- lorsque l'on insère une feuille (Im) au niveau des moyens de guidage en la faisant glisser jusqu'aux moyens de butée (2), la feuille repose sur ladite au moins une zone de support (20) et est maintenue par lesdits moyens de butée (2) si ladite feuille (Im) comprend une encoche de maintien (4) positionnée sur ladite feuille (Im) et de dimension telle que celle-ci chevauche ladite rampe (3) tout en permettant à la zone de support (20) de retenir la feuille,
- une feuille ne comprenant pas d'encoche de maintien (4) ou présentant une encoche (4") ne respectant pas les dimensions et la position sur la feuille de l'encoche de maintien (4) est décalée par ladite rampe (3) de manière à échapper lesdits moyens de butée (2), sous l'effet de la gravité, provoquant l'éjection de la feuille.

2. Elément support (1) selon la revendication 1 dans lequel, ladite rampe (3) est dite deuxième rampe (31) et prolonge une première rampe (30) dont la pente présente un angle d'élévation par rapport à la paroi plane inférieure à l'angle d'élévation de la pente de deuxième rampe (31).

3. Elément support (1) selon la revendication 2, dans lequel la longueur de la première rampe (31) est supérieure à la longueur de la deuxième rampe (30), notamment d'un rapport supérieur à trois.

4. Elément support (1) selon l'une des revendications 1 à 3 dans lequel ladite rampe (3) et lesdits moyens de butée (2) forment un élément monobloc.

5. Elément support (1) selon l'une des revendications 1 à 4 dans lequel, l'élément support (1), ladite rampe (3), lesdits moyens de butée (2) et lesdits moyens de guidage forment une pièce plastique d'un seul tenant.

6. Elément support (1) selon l'une des revendications 1 à 5 dans lequel, lesdits moyens de guidage comprennent une languette de maintien (11) écartée par rapport à ladite paroi plan (10) afin de définir un espace d'insertion prévu pour la réception et le maintien d'un bord de la feuille.

7. Visionneuse stéréoscopique destinée pour la vision en relief d'une image stéréoscopique comprenant un élément support (1) tel que revendiqué selon les revendications 1 à 6.

8. Kit comprenant un élément support (1) selon l'une des revendications 1 à 6 ou une visionneuse selon la revendication 7, et au moins une feuille présentant une encoche de maintien (4) destinée à coopérer avec ledit élément support (1).

9. Kit selon la revendication 8, dans lequel ladite feuille est une image.

10. Utilisation d'une feuille (Im) présentant une encoche de maintien (4) au sens de la revendication 1 pour coopérer avec un élément support (1) selon l'une des revendications 1 à 6 ou encore un élément support (1) d'une visionneuse selon la revendication 7.
